(19) Europäisches Patentamt
European Patent Office
Office européen des brevets

(11) Veröffentlichungsnummer: **0 529 258 B1**

# (12) EUROPÄISCHE PATENTSCHRIFT

(45) Veröffentlichungstag der Patentschrift: **14.06.95**

(51) Int. Cl.[6]: **B62D 6/04**, B62D 7/15, B62D 37/02

(21) Anmeldenummer: **92111667.9**

(22) Anmeldetag: **09.07.92**

(54) **Verfahren und Vorrichtung zur Minimierung des Seitenwind-Einflusses auf das Fahrverhalten eines Fahrzeugs.**

(30) Priorität: **22.08.91 DE 4127725**

(43) Veröffentlichungstag der Anmeldung:
**03.03.93 Patentblatt 93/09**

(45) Bekanntmachung des Hinweises auf die Patenterteilung:
**14.06.95 Patentblatt 95/24**

(84) Benannte Vertragsstaaten:
**DE FR GB IT**

(56) Entgegenhaltungen:
**DE-A- 2 331 616**
**DE-B- 1 108 091**
**DE-C- 3 816 057**
**US-A- 4 540 059**

**PATENT ABSTRACTS OF JAPAN vol. 10, no. 250 (P-491)28. August 1986 & JP-A-61 077 766 (TOYOTA) 21. April 1986**

**PATENT ABSTRACTS OF JAPAN vol. 16, no. 51 (M-1209)10. Februar 1992 & JP-A-03 253 468 (NIPPON SEIKO) 12. November 1991**

(73) Patentinhaber: **Dr.Ing.h.c. F. Porsche Aktiengesellschaft**
**Porschestrasse 42**
**D-70435 Stuttgart (DE)**

(72) Erfinder: **Jacobi, Stefan**
**Hirschstrasse 33**
**W-7032 Sindelfingen (DE)**
Erfinder: **Berkefeld, Volker, Dr.**
**Zimmeräckerstrasse 25**
**W-7253 Renningen (DE)**

EP 0 529 258 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Minimierung des Seitenwind- Einflusses auf das Fahrverhalten eines Fahrzeugs.

Beim Durchfahren einer Seitenwindböe werden Fahrzeuge ohne Lenkkorrektur mehr oder weniger seitlich versetzt und aus dem Wind herausgedreht. Das Fahrzeug weist somit auf einer sich daran anschließenden seitenwindfreien Fahrstrecke eine stationäre Kursabweichung auf. Die Größe des seitlichen Versatzes beziehungsweise der Richtungsänderung hängt neben der Windstärke und der Richtung des Winds relativ zur Fahrtrichtung des Fahrzeugs von der Fahrgeschwindigkeit des Fahrzeugs und dessen Geometrie ab und ist daher von Fahrzeug zu Fahrzeug verschieden.

Die Auswirkung des Seitenwindeinflusses auf ein Fahrzeug wird in der Regel schon bei dessen Konstruktion berücksichtigt und durch entsprechende Maßnahmen so gering wie möglich gehalten. Aus physikalischen Gründen ist es jedoch nicht möglich, den Einfluß des Seitenwinds auf das Fahrverhalten des Fahrzeugs allein durch konstruktive Maßnahmen gänzlich zu beseitigen.

Es wurde daher bereits versucht, die Beeinflussung des Fahrverhaltens eines Fahrzeugs durch Seitenwind weiter zu verringern, in dem dieser sensorisch erfaßt und mittels eines Stellglieds entweder eine Achse des Fahrzeugs relativ zu diesem oder den Lenkwinkel der Räder der Achse gezielt verstellt.

Aus der DE-PS 11 08 091 ist eine dahingehend arbeitende Vorrichtung bekannt. Über je einen Druckabnahmepunkt auf beiden Fahrzeugseiten führen pneumatische Leitungen zu Kammern beidseitig einer Membrane eines pneumatischen Stellelements. Das pneumatische Stellelement betätigt ein hydraulisches Ventil, mit dem ein Stellglied angesteuert ist. Das Stellglied mit einer federbelasteten Mittellage verschiebt in einer ersten Ausführung die Aufhängepunkte einer Achse des Fahrzeugs relativ gegenüber der Karosserie, oder verstellt in einer zweiten Ausführung den Lenkwinkel der Räder dieser Achse.

Die Wirkung der Druckdifferenz auf den Lenkwinkel ist bei dieser bekannten Vorrichtung aber fest vorgegeben (weitgehend proportional zur Druckdifferenz) und daher aus fahrdynamischer Sicht nicht optimal. Ebenso wirkt sich jede Störung in der anströmenden Luft unmittelbar auf den Lenkwinkel aus.

Gemäß der DE 23 31 616 A1 werden Seitenwindeinflüsse auf das Fahrverhalten eines Fahrzeugs durch einen der zeitlichen Ableitung der Fahrzeug-Querbeschleunigung proportionalen Lenkeinschlag kompensiert. Die Querbeschleunigung muß hierzu jedoch durch einen Querbeschleunigungssensor erfaßt werden.

Querbeschleunigungssensoren für den Einsatz in Fahrzeugen sind jedoch relativ aufwendig, da ihr Ausgangssignal nur mit verhältnismäßig hohem Aufwand von Störeinflüssen bereinigt werden kann. Die Freiheit von insbesondere impulsartigen Störeinflüssen ist jedoch für die Differenzierung des Sensorsignals unbedingte Voraussetzung, sofern das Ansteuersystem für den Lenkwinkel nicht zu unkontrollierten impulsartigen Stellbewegungen neigen soll.

Schließlich ist mit der DE 38 16 057 C1 eine Vorrichtung zur Bestimmung von Seitenwindeinflüssen an einem Fahrzeug bekannt geworden. Am Fahrzeug sind insgesamt sechs Drucksonden angeordnet, deren Druckwerte in aufwendiger Weise miteinander verknüpft werden. Die Verknüpfung der Druckwerte erfordert jedoch einen relativ hohen Rechenaufwand. Da zudem wenigstens teilweise Absolutdruckwerte benötigt werden, müssen alle Sensoren, um weniger aufwendige Differenzdrucksensoren verwenden zu können, einseitig mit einer Referenzdruckkammer verbunden werden, die über eine Drosselstrecke mit der Atmosphäre zu verbinden ist.

Es ist Aufgabe der Erfindung, ein Verfahren und eine Vorrichtung zur Minimierung des Seitenwind-Einflusses auf das Fahrverhalten eines Fahrzeugs zu schaffen, das mit einem verhältnismäßig geringen sensorischen Aufwand zur Erfassung des Seitenwind-Einflusses auskommt, eine weitgehend freie Steuerung eines Lenkelements des Fahrzeugs in Abhängigkeit von der oder den sensorisch erfaßten Größen zuläßt und dem Einfluß des Seitenwinds auf das Fahrzeug in fahrdynamisch möglichst optimaler Weise entgegenwirkt.

Die Erfindung ist durch die Merkmale des Anspruchs 1 beziehungsweise 14 gelöst. Weitere, die Erfindung in vorteilhafter Weise ausgestaltende Merkmale sind den Unteransprüchen zu entnehmen.

Die Vorteile der Erfindung sind in erster Linie darin zu sehen, daß ein Verfahren und eine Vorrichtung zur Minimierung des Seitenwind-Einflusses auf das Fahrverhalten eines Fahrzeugs geschaffen ist, das mit einem verhältnismäßig geringen sensorischen Aufwand zur Erfassung des Seitenwind-Einflusses auskommt; das Verfahren beziehungsweise die Vorrichtung läßt eine weitgehend freie Steuerung eines Lenkelements des Fahrzeugs in Abhängigkeit von der oder den sensorisch erfaßten Größen zu und zeichnet sich darüberhinaus dadurch aus, daß dem Einfluß des Seitenwinds auf das Fahrzeug in fahrdynamisch möglichst optimaler Weise entgegengewirkt wird.

Zur Erfassung des Seitenwind-Einflusses, d. h. der auf das Fahrzeug wirkenden Windseitenkraft, wird lediglich ein einziger Differenzdruckaufnehmer benötigt, welcher über möglichst gleichlange Schläuche oder Leitungen mit zwei Druckabnahmepunkten an der Fahrzeugkarosserie zu verbinden ist. Die Druckabnahmepunkte liegen symmetrisch zur senkrecht verlaufenden Längsebene des Fahrzeugs an dessen Vorbau, beispielsweise an den Vorderkotflügeln. Sie werden in einen Bereich der Karosserieaußenhaut gelegt, der frei von Turbulenzen ist, und an dem sich die Strömung auch unter ungünstigen Anströmbedingungen nicht ablöst.

Ein Stellglied zur Einstellung des Zusatzlenkwinkels an einer Achse wird erfindungsgemäß derart eingestellt, daß die durch die Windseitenkraft bedingte Gierwinkeländerung des Fahrzeugs gegen Null geht. Der Zusatzlenkwinkel wird vorteilhaft mittels eines Digitalrechners errechnet; das Zeitverhalten des errechneten Zusatzlenkwinkels entspricht einem $PDT_1$-Verhalten, mit der Druckdifferenz als Eingangsgröße und der Fahrgeschwindigkeit als die die Übertragungsparameter beeinflussende Größe.

Die Bestimmung der Reaktion des Stellglieds auf Seitenwind erfolgt in Abhängigkeit vom Einfahren in eine oder dem Ausfahren aus einer Seitenwindböe mittels unterschiedlicher Parametersätze. Das Einfahren / Ausfahren in die / aus der Seitenwindböe wird erfaßt, in dem die erfaßten Werte des Differenzdrucks mit einem Tiefpaß gefiltert und jeweils aus der Differenz zweier nacheinander erfaßter Werte des gefilterten Differenzdrucks ein Ansteigen oder ein Abfallen des Differenzdrucks ermittelt wird.

Die Erfindung wird nachstehend anhand der in den Zeichnungen dargestellten Ausführungsbeispiele näher erläutert.

Es zeigt:

- Fig. 1 ein Schemabild eines Fahrzeugs,
- Fig. 2 ein Vektordiagramm mit einem aus Windgeschwindigkeits- und Fahrgeschwindigkeitsvektor resultierenden Summenvektor,
- Fig. 3 ein Flußdiagramm zur Bestimmung eines Hinterachslenkwinkels, der einen Seitenwindeinfluß auf das Fahrzeug minimieret
- Fig. 4 ein Betriebsparameter- Zeit- Diagramm des Fahrzeugs bei Durchfahren einer Seitenwindböe ohne Ansteuerung des Hinterachslenkwinkels,
- Fig. 5 ein Diagramm nach Fig. 4, jedoch mit seitenwindkraftabhängiger Ansteuerung des Hinterachslenkwinkels,
- Fig. 6 ein Diagramm, das den seitlichen Versatz eines Fahrzeugs beim Durchfahren einer Seitenwindböe mit und ohne Ansteuerung des Hinterachslenkwinkels darstellt.

In **Fig. 1** ist mit 1 ein zweiachsiges Fahrzeug gezeigt, dessen erste Achse 2 bzw. deren Räder 3, 4 über eine erste Lenkvorrichtung 5 willkürlich durch einen Fahrzeugführer lenkbar ist. Eine zweite Achse 6 ist relativ gegenüber den Punkten ihrer Anbindung an der Karosserie des Fahrzeugs 1 / die Räder 7, 8 der Achse 6 sind in ihrem Lenkeinschlag (Hinterachslenkwinkel $delta_h$) in Abhängigkeit von Betriebsparametern 9 des Fahrzeugs 1 über eine zweite Lenkvorrichtung 10 verschiebbar/steuerbar. Die zweite Lenkvorrichtung 10 ist hierzu mit einem hilfskraftbetätigten Stellglied 11 zur Einstellung eines bestimmten Hinterachslenkwinkels $delta_h$ ausgestattet. Das Stellglied 11 arbeitet ohne Einschränkung der Allgemeinheit mit hydraulischem Hilfskraftmedium, das dem Stellglied 11 über einen elektromagnetisch betätigten Ventilblock 12 zugeführt oder über diesen vom Stellglied 11 in ein Vorratsgefäß 13 abgeführt wird. Dem Ventilblock 12 wird schließlich über eine Pumpe 14 aus dem Vorratsgefäß 13 Hydraulikmedium zugeführt.

Der Ventilblock 12 wird über ein Steuergerät 15, das vorzugsweise einen Digitalrechner (Mikrorechner) umfaßt, in Abhängigkeit von den Betriebsparametern 9 des Fahrzeugs 1, zu denen unter anderen auch eine mittels eines Fahrgeschwindigkeitsgebers 16 erfaßte Fahrgeschwindigkeit v des Fahrzeugs zählt, gesteuert. Zur exakten Einstellung des Hinterachslenkwinkels $delta_h$ kann das Steuergerät 15 einen unterlagerten Stellregelkreis umfassen, wozu der Hinterachslenkwinkel $delta_h$ über einen Hinterachslenkwinkelgeber 17 erfaßt und dem Steuergerät 15 zugeführt wird.

Zur Bestimmung des sich auf das Fahrverhalten des Fahrzeugs auswirkenden Einflusses von Seitenwind sind gegenüberliegend an den Seiten des Fahrzeugs 1 Durckabnahmepunkte 18 und 19 angeordnet. An den Druckabnahmepunkten 18 und 19 wird der im Bereich der Karosserieaußenhaut anstehende Luftdruck gemessen.

Die Druckabnahmepunkte 18 und 19 sind als Bohrungen 20 und 21 ausgeführt. Ein den Differenzdruck Dp zwischen beiden Druckabnahmepunkten 18, 19 erfassender Differenzdruckaufnehmer 22 ist zentral zwischen diesen angeordnet und über möglichst gleich lange Schläuche oder Rohrleitungen 23, 24 mit diesen verbunden.

Gemäß **Fig. 1** greift eine Windseitenkraft $F_W$ bei von Null verschiedenen Schiebewinkeln alpha nach **Fig. 2** in einem Druckpunkt D des Fahrzeugs 1 nach **Fig. 1** an. Der Schiebewinkel alpha ist im Vektordiagramm nach **Fig. 2** als Winkel zwischen dem Fahrgeschwindigkeitsvektor v und dem resultierenden Summenvektor $v_{Res}$ aus Fahrgeschwindigkeitsvektor v und Windgeschwindigkeitsvektor $v_W$ eingezeichnet.

Die Windseitenkraft $F_W$ zeigt immer senkrecht zur Fahrzeuglängsachse in Richtung auf die windabgewandte Seite des Fahrzeugs und läßt sich berechnen gemäß

$F_W = 0{,}5^*ro^*v_{Res}{}^{2*}c_s{}^*A_f$, (Gl. 1)

mit:

| | |
|---|---|
| ro | Luftdichte, |
| $v_{Res}$ | Anströmgeschwindigkeit der Luft, |
| $c_s$ | Seitenkraftbeiwert des Luftwiderstands des Fahrzeugs, |
| $A_f$ | Fahrzeugstirnfläche. |

In Versuchen hat sich gezeigt, daß die Windseitenkraft $F_W$ proportional zu dem vom Differenzdruckaufnehmersystem 26 gemessenen Differenzdruck Dp ist.

Der so bestimmte Wert der Windseitenkraft $F_W$ ist weitgehend unabhängig vom Schiebewinkel alpha. Um jedoch gute Meßergebisse zu erhalten, sollten das Differenzdruckaufnehmersystem 26 aus Differenzdruckaufnehmer 22, Druckaufnahmepunkte 18, 19 bzw. Bohrungen 20, 21 und Leitungen 23, 24 (und Steuergerät 15) nach den folgenden Richtlinien des Fahrzeugs 1 angeordnet sein bzw. werden:

- Die Druckaufnahmepunkte 18, 19 sollten symmetrisch zur senkrecht verlaufenden Längsebene des Fahrzeugs an dessen Vorderbau, vorzugsweise am linken und rechten Vorderkotflügel (nicht gezeigt) angeordnet sein.
- Die Druckaufnahmepunkte 18, 19 sollten derartig am Fahrzeug 1 angeordnet werden, daß sie selbst bei großen Beträgen des Schiebewinkels alpha zwischen Fahrzeugslängsachse und des Summenvektors $v_{Res}$ zwischen dem Fahrgeschwindigkeitsvektor v und dem Windgeschwindigkeitsvektor $v_W$ gemäß **Fig. 2** nicht in Gebieten abgelöster Luftströmung liegen.
- Das Druckaufnehmersystem soll derart abgestimmt sein, daß es die an der Karosserieoberfläche im Bereich der Druckabnahmepunkte 18, 19 auftretenden Druckschwankungen in einem Frequenzbereich von 0 Hz bis etwa 5 Hz nur unwesentlich verfälscht durch Absorbtion, Reflektion und Resonanzen aufnimmt.

Bei der Simulation einer Vorbeifahrt eines Fahrzeugs an einer Seitenwindböe hat sich gezeigt, daß sich das Einfahren in eine und das Ausfahren aus einer Seitenwindböe unterschiedlich auf das Fahrverhalten des Fahrzeugs auswirkt.

Erfindungsgemäß erfaßt daher eine dem Differenzdruckaufnehmer nachgeschaltete Rechenschaltung, die im gegebenen Fall dem Steuergerät 15 zugeordnet ist, aus den werten des gemessenen Differenzdrucks Dp die Einfahrt des Fahrzeugs in eine und die Ausfahrt aus einer Seitenwindböe, und erzeugt in Abhängigkeit davon ein diese Zustände charakterisierendes Schaltsignal oder entsprechende Entscheidungszustände zur weiteren Veranlassung.

Zur Erfassung des Einfahrens in eine oder des Ausfahrens aus einer Seitenwindböe filtert die Rechenschaltung im Steuergerät 15 die Werte der berechneten Windseitenkraft $F_{W,k}$ oder die erfaßten Werte des Differenzdrucks Dp mit einem Tiefpaß (gefilterte Windseitenkraftwerte $F_{Wf,k}$), beispielsweise entsprechend einem $PT_1$- Algorithmus oder mittels eines entsprechend wirkenden Tiefpaßfilters und bildet die Differenz $DF_{Wf} = |F_{Wf,k}| - |F_{Wf,k-1}|$ der Beträge der zum augenblicklichen Zeitpunkt (Rechendurchlauf k) und zum Zeitpunkt der letzten Berechnung (Rechendurchlauf k-1) bestimmten gefilterten Windseitenkraftwerte $|F_{Wf,k-1}|$.

Die Rechenschaltung vergleicht die Differenz $DF_{Wf}$ mit einem windseitenkraftabhängigen Schwellwert $-Schw^*|F_{Wf,k-1}|$ und erkennt ein Einfahren in die Seitenwindböe, sofern die Differenz $DF_{Wf}$ der gefilterten Windseitenkraftwerte größer als der windseitenkraftabhängige Schwellwert ist: $DF_{Wf} > -Schw^*|F_{Wf,k-1}|$. Ein Ausfahren aus der Seitenwindböe wird von der Rechenschaltung 15 erkannt, sofern die Differenz $DF_{Wf}$ der gefilterten Windseitenkraftwerte kleiner als der windseitenkraftabhängige Schwellwert ist: $DF_{Wf< -Schw^*}|F_{Wf,k-1}|$. Die Tiefpaßfilterung der Windseitenkraftwerte $F_{Wf}$ erfolgt vorzugsweise mit einer Eckfrequenz im Bereich von ca. 0,2 Hz.

Mit den so gewonnenen Windseitenkraftwerten und dem Schaltsignal oder dem Entscheidungszustand kann somit die Minimierung des Seitenwindeinflusses auf das Fahrverhalten eines Fahrzeugs betrieben werden.

Zum besseren Verständnis der Wirkung des Seitenwinds auf das Fahrzeug und der Wirkungsweise des Verfahrens bzw. der Vorrichtung werden zunächst an Hand der **Fig. 1** die physikalischen Zusammenhänge zwischen Seitenwind und Fahrzeug näher erläutert.

Als Ausgangsgleichungen für den Fall einer Hinterradansteuerung werden das Kräftegleichgewicht in Fahrzeugquerrichtung und das Momentengleichgewicht um eine Fahrzeughochachse durch den Schwerpunkt S des Fahrzeugs 1 formuliert. Diese zwei Gleichungen werden aufgestellt für die Randbedingungen:

Vorderachslenkwinkel $delta_v$ = 0, Hinterachslenkwinkel $delta_h \neq 0$.

Die Kräftegleichung quer zur Fahrtrichtung mit den Bezeichnungen in der **Fig.1** lautet:

$$m*v*(dpsi/dt + dbeta/dt) = F_{yv} + F_{yh} - F_W, \qquad (Gl.\ 2)$$

mit:

| | |
|---|---|
| m | Masse des Fahrzeugs, |
| v | Fahrgeschwindigkeit des Fahrzeugs, |
| psi | Gierwinkel (Drehung des Fahrzeug um den Schwerpunkt S), |
| dpsi/dt | Gierwinkelgeschwindigkeit (zeitliche Änderung des Gierwinkels), |
| beta | Schwimmwinkel (Winkel zwischen der Fahrzeuglängsachse und der momentanen Bewegungsrichtung des Fahrzeugs, |
| dbeta/dt | Schwimmwinkelgeschwindigkeit (zeitliche Änderung des Schwimmwinkels), |
| $F_{yv}$ | Seitenkraft an der ersten Achse 2 (Vorderachse), |
| $F_{yh}$ | Seitenkraft an der zweiten Achse 6 (Hinterachse), |
| $F_W$ | Windseitenkraft. |

Die Momentengleichung um die Hochachse im Fahrzeugschwerpunkt S kann angesetzt werden zu:

$$M_G = J_z*d^2psi/dt^2 = l_v*F_{yv} - l_h*F_{yh} + (l_w - l_v)*F_W, \qquad (Gl.\ 3)$$

mit:

| | |
|---|---|
| $M_G$ | Giermoment im Schwerpunkt des Fahrzeugs, |
| $J_z$ | Trägheitsmoment des Fahrzeugs um die durch den Schwerpunkt verlaufende Hochachse, |
| $d^2psi/dt^2$ | Gierwinkelbeschleunigung, |
| $l_v$ | Abstand der ersten Achse 2 (Vorderachse) zum Schwerpunkt S, |
| $l_h$ | Abstand der zweiten Achse 6 (Hinterachse) zum Schwerpunkt S, |
| $l_W$ | Abstand der ersten Achse 2 zum resultierenden Windangriffspunkt (Druckpunkt) D. |

Unter der Voraussetzung, daß die Seitenkräfte $F_{yv}$ und $F_{yh}$ linear mit den zugehörigen Schräglaufwinkeln $beta_v$ und $beta_h$ wachsen, ergibt sich:

$$F_{yv} = c_v*beta_v, \qquad (Gl.\ 4)$$

mit:

| | |
|---|---|
| $c_v$ | Schräglaufsteifigkeit an der ersten Achse 2, |
| $beta_v$ | Schräglaufwinkel (Winkel zwischen Felgenebene und Bewegungsrichtung des Rads) an der ersten Achse 2, |

und

$$F_{yh} = c_h*beta_h, \qquad (Gl.\ 5)$$

mit:

| | |
|---|---|
| $c_h$ | Schräglaufsteifigkeit an der zweiten Achse 6, |
| $beta_h$ | Schräglaufwinkel (Winkel zwischen Felgenebene und Bewegungsrichtung des Rads) an der zweiten Achse 6. |

Unter Voraussetzung kleiner Winkel ergeben sich die Schräglaufwinkel $beta_v$ und $beta_h$ zu:

$$beta_v = -beta - (l_v*(dpsi/dt)/v). \qquad (Gl.\ 6)$$

$$beta_h = -beta + (l_h*(dpsi/dt))/v + delta_h. \qquad (Gl.\ 7)$$

Erfindungsgemäß wird nun an der zweiten Achse 6 ein Zusatzlenkwinkel $delta_z$ derart aufgebracht, daß die durch die Windseitenkraft $F_W$ bewirkte Gierwinkeländerung (Gierwinkelgeschwindigkeit dpsi/dt und Gierwinkelbeschleunigung $d^2psi/dt^2$) des Fahrzeugs gegen Null geht (dpsi/dt -->0, $d^2psi/dt^2$ -->0). Da an der zweiten Achse 6 kein weiterer Lenkwinkel aufgebracht werden soll, insbesondere die zweite Achse 6 vom Fahrer nicht beeinflußt ist, entspricht der mittels des Stellgliedes 11 eingestellte Hinterachslenkwinkel dem Zusatzlenkwinkel: $delta_h = delta_z$.

Durch Reduzieren der Gleichungen bleibt eine Differentialgleichung übrig, die als zeitlich veränderliche Größen nur noch die Windseitenkraft $F_W$ und den Hinterachslenkwinkel $delta_h$ enthält:

$delta_h + T_{1,g}*v*(ddelta_h/dt) = V_g*(F_W + T_{D,g}*v*(dF_W/dt))$, (Gl. 8)

mit:

$ddelta_h/dt$ Hinterachslenkwinkelgeschwindigkeit (zeitliche Ableitung des Hinterachslenkwinkels $delta_h$), mit den Koeffizienten:

$$T_{1,g} = \frac{m*l_h}{c_v*l},$$

$$T_{D,g} = \frac{m*(l_w - l_v)}{c_v*l_w + c_h*(l_w - l)},$$

$$V_g = \frac{c_v*l_w + c_h*(l_w - l)}{c_v*c_h*l},$$

mit:

l Radstand.

Aus dieser Gleichung ist somit der einzustellende Hinterachslenkwinkel $delta_h$ ermittelbar. Da das Steuergerät 15 vorzugsweise auf der Basis eines Digitalrechners realisiert werden soll, welcher aus Aufwands- und auch aus Kostengründen eine vertretbare Rechenleistung aufweisen soll, wird der einzustellende Hinterachslenkwinkel $delta_h$ mittels des Digitalrechners numerisch bestimmt, wozu die Differentialquotienten für den Hinterachswinkel $ddelta_h/dt$ und $dF_W/dt$ durch die Differenzenquotienten

$$Ddelta_{h,k}/Dt = \frac{(delta_{h,k} - delta_{h,k-1})}{Dt}, \qquad \text{(Gl. 9)}$$

mit:

$Ddelta_{h,k}/Dt$ Differenzenquotient des Hinterachslenkwinkels beim augenblicklichen (k-ten) Berechnungsschritt,

$Dt$ Zeitinkrement bei der Berechnung des Differenzenquotienten (Zeit zwischen zwei Iterationsschritten),

$delta_{h,k}$ Hinterachslenkwinkel zum Zeitpunkt des augenblicklichen (k-ten) Berechnungsschritts,

$delta_{h,k-1}$ Hinterachslenkwinkel zum Zeitpunkt der letzten Berechnung, (k-1)-ter Berechnungschritt,

und

$$\frac{DF_{W,k}}{Dt} = \frac{(F_{W,k} - F_{W,k-1})}{Dt}, \qquad \text{(Gl. 10)}$$

mit:

$DF_{W,k}$ Differenzenquotient der Windseitenkraft zum Zeitpunkt des augenblicklichen (k-ten) Berechnungsschritts.

$F_{W,k}$ Windseitenkraft zum Zeitpunkt des augenblicklichen (k-ten) Berechnungsschritts,
$F_{W,k-1}$ Windseitenkraft zum Zeitpunkt der letzten Berechnung

ersetzt werden. Der nunmehr durch das Steuergerät 15 einzustellende Hinterachslenkwinkel $delta_h$ ergibt sich im k-ten Rechendurchlauf im Zeitintervall Dt (Berechnungszeitraum oder Programmdurchlaufzeit) zu:

$$delta_{h,k} = \frac{T_{1,g}*v*delta_{h,k-1}+V_g*(F_{W,k}*Dt+T_{D,g}*v*(F_{W,k}-F_{W,k-1}))}{T_{1,g}*v+Dt}, \quad \text{(Gl. 11)}$$

mit:

| | |
|---|---|
| $T_{1,g}$, $T_{D,g}$ und $V_g$: | Koeffizienten, siehe Gl. 8, |
| $delta_{h,k}$: | Hinterachslenkwinkel zum Zeitpunkt des augenblicklichen (k-ten) Berechnungsschritts, |
| $delta_{h,k-1}$: | Hinterachslenkwinkel zum Zeitpunkt der letzten Berechnung, |
| $F_{W,k}$: | Windseitenkraft zum Zeitpunkt des augenblicklichen (k-ten) Berechnungsschritts, |
| $F_{W,k-1}$: | Windseitenkraft zum Zeitpunkt der letzten ((k-1)-ten) Berechnung, |
| v: | Fahrgeschwindigkeit zum augenblicklichen Zeitpunkt. |

Diese Gleichung gilt jedoch nur für ein Linearmodell und wenn das Fahrzeug in seiner gesamten Länge vom Seitenwind getroffen wird.

Fahrdynamik-Simulationsberechnungen zeigen, daß die Störung durch einen Seitenwindimpuls aufgrund Von Nichtlinearitäten bei ansteigendem Seitenwind anders auszuregeln ist als bei abfallendem Seitenwind. Zusätzlich ist beim Durchfahren einer Windböe die Anströmung des Fahrzeuges kurzzeitig stark instationär.

Aus diesem Grund müssen diese Zustände erkannt und mit unterschiedlichen Hinterachslenkwinkelreaktionen kompensiert werden. Dazu werden die über Gleichung 11 oder 12 einzustellenden Hinterachslenkwinkel je nach Zustand mit unterschiedlichen Parametersätzen $T_{1,g,ein}$, $T_{D,g,ein}$ oder $T_{1,g,aus}$, $T_{D,g,aus}$ berechnet.

Die durch ein $PDT_1$-Verhalten beschriebene Reaktion des Achslenkwinkels auf eine Windseitenkraftanregung ist bei hoher Fahrgeschwindigkeit und mit den hier gültigen fahrzeugspezifischen Konstanten nach maximal 2 Sekunden abgeschlossen. Während dieser Zeit muß der zu Beginn der Anregung geladene Parametersatz im Rechenalgorithmus wirksam bleiben.

Zur Erfassung des Einfahrens in eine und des Ausfahrens aus einer Seitenwindböe werden die Werte der berechneten Windseitenkraft $F_{W,k}$ oder die erfaßten Werte des Differenzdrucks Dp, wie weiter oben beschrieben, mit einem Tiefpaß gefiltert (gefilterte Windseitenkraftwerte $F_{Wf,k}$) und die Differenz der Beträge der zum augenblicklichen Zeitpunkt (Rechenschritt k) und zum Zeitpunkt der letzten Berechnung (Rechenschritt k-1) bestimmten gefilterten Windseitenkraftwerte$|F_{Wf,k}|$,$|F_{Wf,k-1}|$ gebildet und mit einem windseitenkraftabhängigen Schwellwert $-Schw*|F_{Wf,k-1}|$ verglichen, wobei das Einfahren in die Seitenwindböe erkannt wird, sofern die Differenz $DF_{Wf}=|F_{Wf,k}|-|F_{Wf,k-1}|$ der gefilterten Windseitenkraftwerte größer als der windseitenkraftabhängige Schwellwert ist: $DF_{Wf}>-Schw*|F_{Wf,k-1}|$.

Das Ausfahren aus der Seitenwindböe wird erkannt, sofern die Differenz $DF_{Wf}=|F_{Wf,k}|-|F_{Wf,k-1}|$ der gefilterten Windseitenkraftwerte kleiner als der windseitenkraftabhängige Schwellwert ist: $DF_{Wf}<-Schw*|F_{Wf,k-1}|$.

In **Fig. 3** ist ein Diagramm zur Bestimmung des Hinterachslenkwinkels gezeigt. Auf der Basis dieses Flußdiagramms kann ein entsprechendes Unterprogramm erstellt und beispielsweise in ein Stellprogramm für eine Hinterachslenkung eingebunden werden.

Nach dem Programmstart, 27, werden zunächst die Eingangsgrößen Differenzdruck Dp und Fahrgeschwindigkeit v ermittelt, 28. Nach Bestimmung der Windseitenkraft $F_W$ aus dem Differenzdruck Dp und einem Proportionalitätsfaktor $K_p$, 29, werden die Windseitenkraftwerte $F_W$ mittels eines $PT_1$- Algorithmus mit einer Glättungskonstante GF exponentiell geglättet, 30, und die Differenz $DF_{Wf}$ berechnet, 31.

Es wird geprüft, ob die Differenz der Windseitenkraftwerte $DF_{Wf}$ größer als der windseitenkraftabhängige Schwellwert $-Schw*|F_{Wf,k-1}|$ ist, 33. Ist dies der Fall, so werden die Parameter zur Bestimmung der Gleichung 11 auf den Parametersatz für Einfahrt in eine Seitenwindböe ($T_{D,g}:=T_{D,g,Ein}$; $T_{1,g}:=T_{1,g,Ein}$) gesetzt, 34 und der Hinterachswinkel gemäß Gleichung (Gl. 11) bestimmt, 35 und das Programm beendet, 36.

Ist die Bedingung 33 nicht erfüllt, so wird der Parametersatz zur Bestimmung des Hinterachslenkwinkels $delta_h$ auf den Parametersatz für Ausfahrt des Fahrzeugs aus der Seitenwindböe ($T_{D,g}:=T_{D,g,Aus}$;

$T_{1,g}$: = $T_{1,g,Aus}$) gesetzt und wiederum mit dem Programmschritt 35 fortgefahren.

Der exponentielle Glättungsfaktor GF und der Schwellenfaktor Schw werden so gewählt, daß der jeweils andere Parametersatz erst dann geladen wird, wenn eine signifikante Windseitenkraftänderung anliegt, die größer als diejenige ist, die durch hochfrequente Turbulenzen in Windböen hervorgerufen wird.

Der exponentielle Glättungsfaktor GF bestimmt die Tiefpaßgrenzfrequenz $f_0$ und wird mit

$$GF = 1-\exp(-2\pi * f_0 * DT) \qquad \text{(Gl. 12)}$$

berechnet, wobei DT das Zeitintervall zwischen (k-1)-tem und k-tem Rechenschritt ist.

In **Fig. 4** ist die zeitliche Abhängigkeit der Gierwinkelgeschwindigkeit dpsi/dt und der aus der Druckdifferenz Dp bestimmten Windseitenkraft $F_W$ bei ungesteuertem Hinterachslenkwinkel $delta_h$ beim Durchfahren einer Seitenwindböe 42 gezeigt.

Das Fahrzeug durchfährt hierbei zwischen den Zeitpunkten $t_e$ und $t_a$ die Seitenwindböe 42. Wie dem Diagramm zu entnehmen ist, schwingt die Gierwinkelgeschwindigkeit dpsi/dt nach dem Einfahren in die Seitenwindböe 42 mit relativ hoher Amplitude nach einer Richtung aus, um beim Ausfahren mit einer gewissen Verzögerung entgegengesetzt überzuschwingen.

Wird dagegen der Hinterachslenkwinkel $delta_h$ entsprechend dem Verfahren gesteuert, so bleibt die Gierwinkelgeschwindigkeit dpsi/dt während des Durchfahrens der Seitenwindböe 42 nahezu null, wie dies der **Fig. 5** zu entnehmen ist. Der Hinterachslenkwinkel $delta_h$ wird hierbei derart gesteuert, daß er den sich sprungförmig ändernden Windseitenkraftwerten entsprechend dem Verhalten eines $PDT_1$- Glieds folgt. Wie der **Fig. 5** zu entnehmen ist, verhält sich das Fahrzeug bezüglich der Gierwinkelgeschwindigkeit bei gesteuertem Hinterachslenkwinkel $delta_h$ sehr ruhig.

Die in den **Fig. 4** und **5** gezeigten Meßgrößen werden durch einen Tiefpaß mit einer Grenzfrequenz im Bereich von 5 Hz gefiltert.

Die Auswirkungen der Steuerung des Hinterachslenkwinkels wird noch deutlicher, wenn man gemäß **Fig. 6** den seitlichen Versatz $s_v$ über der Fahrtstrecke s aufträgt. Hierbei fährt das Fahrzeug bei der Wegmarke $s_e$ in die Seitenwindböe 42 ein und bei der Wegmarke $s_a$ aus dieser wieder aus. Das Fahrzeug beschreibt ohne Steuerung des Hinterachslenkwinkels $delta_h$ die Bahnkurve 43, mit einem deutlich erkennbaren seitlichen Versatz $s_v$.

Mit der Steuerung nach dem oben beschriebenen Verfahren fährt das Fahrzeug dagegen auf der Bahnkurve 44, womit sich unmittelbar am Ende der Seitenwindböe und insbesondere durch die geringere Kursabweichung des Fahrzeugs im Verlauf des Durchfahrens der Seitenwindböe eine deutlich geringere Kursabweichung und somit auch ein wesentlich geringerer seitlicher Versatz $s_v$ ergibt.

Eine Steuerung nach dem oben genannten Verfahren kann ohne Einschränkungen auch an der ersten Achse 2 eingesetzt werden. Hierzu ist das Stellglied 11 so abzuändern, daß es an der ersten Achse 2 wirkt und einem vom Fahrer eingestellten Vorderachslenkwinkel $delta_v$ den Zusatzlenkwinkel $delta_z$ überlagert, so daß sich an der ersten Achse 2 der ein Gesamtlenkwinkel $delta_{gv}$ = $delta_v$ + $delta_z$ einstellt.

Die Randbedingungen lauten nun: Vorderachslenkwinkel $delta_v \neq 0$ und Hinterachslenkwinkel $delta_h$ = 0.

Die Gleichungen 6 und 7 nehmen dadurch folgende Form an:

$$beta_v = -beta-(l_v*(dpsi/dt)/v) + delta_h. \qquad \text{(Gl. 13)}$$

$$beta_h = -beta + (l_h*(dpsi/dt)/v). \qquad \text{(GL. 14)}$$

und die Koeffizienten in Gleichung 8 berechnen sich zu:

$$T_{1,g}=\frac{m*l_v}{c_h*l},$$

$$T_{D,g}=\frac{m*(l_w-l_v)}{c_v*l_w+c_h*(l_w-l)},$$

$$V_g=\frac{-c_v*l_w+c_h*(l-l_w)}{c_v*c_h*l},$$

**Patentansprüche**

1. Verfahren zur Minimierung des Seitenwind-Einflusses auf das Fahrverhalten eines durch einen Fahrzeugführer willkürlich lenkbaren wenigstens zweiachsigen Fahrzeugs (1), wobei gegenüberliegend an den Seiten des Fahrzeugs (1) Druckabnahmepunkte (18, 19) zur Messung des im Bereich der Karosserieaußenhaut anstehenden Luftdrucks angeordnet sind, und mittels eines auf den Differenzdruck (Dp) zwischen den Druckabnahmepunkten (18, 19) beider Fahrzeugseiten ansprechenden Stellglieds (11,12) an einer Achse gegen den Einfluß des Seitenwinds gerichtete Lenkbewegungen erzeugt werden, **dadurch gekennzeichnet**, daß mittels des Stellglieds (11, 12) ein Zusatzlenkwinkel ($delta_z$) an einer Achse derart eingestellt wird, daß die durch die aus dem durch Messung erfaßten Differenzdruck (Dp) bestimmte auf das Fahrzeug (1) wirkende Windseitenkraft ($F_W$) bewirkte Gierwinkeländerung (Gierwinkelgeschwindigkeit dpsi/dt, Gierwinkelbeschleunigung $d^2psi/dt^2$) des Fahrzeugs (1) gegen Null geht (dpsi/dt --> 0, $d^2psi/dt^2$ --> 0).

2. Verfahren nach Anspruch 1, **dadurch gekennzeichnet**, daß der einzustellende Zusatzlenkwinkel ($delta_z$) durch Lösen der sich aus der Bewegungsgleichung des Fahrzeugs (1) um die durch den Schwerpunkt des Fahrzeugs (1) verlaufende Hochachse (Giermomentgleichgewicht) ergebenden Differentialgleichung des fahrdynamischen Einspur- Linearmodells, mit Gierwinkeländerung (Gierwinkelgeschwindigkeit dpsi/dt, Gierwinkelbeschleunigung $d^2psi/dt^2$) gleich Null ($dpsi/dt=0$, $d^2psi/dt^2=0$) und Windseitenkraft ($F_W=K_p*Dp$; $K_p$: Proportionalitätsfaktor) proportional zur Druckdifferenz (Dp), ermittelt wird.

3. Verfahren nach Anspruch 1 oder 2, **dadurch gekennzeichnet**, daß der einzustellende Zusatzlenkwinkel ($delta_z$) mittels eines Digitalrechners (15) numerisch bestimmt wird, wobei sich der einzustellende Zusatzlenkwinkel ($delta_z$, $delta_{z,k}$) im k-ten Rechendurchlauf im Zeitintervall (Dt) ergibt zu:

$$(delta_{z,k}=\frac{T_{1,g}*v*delta_{z,k-1}+V_g*(F_{W,k}*Dt+T_{D,g}*v*(F_{W,k}-F_{W,k-1}))}{T_{1,g}*v+Dt}, \quad (Gl.\ 11)$$

mit:

| | |
|---|---|
| $T_{1,g}$, $T_{D,g}$ und $V_g$: | Koeffizienten, |
| $delta_{z,k}$: | Zusatzlenkwinkel zum augenblicklichen Zeitpunkt, |
| $delta_{z,k-1}$: | Zusatzlenkwinkel zum Zeitpunkt der letzten Berechnung, |
| $F_{W,k}$: | Windseitenkraft zum augenblicklichen Zeitpunkt, |

| | |
|---|---|
| $F_{W,k-1}$: | Windseitenkraft zum Zeitpunkt der letzten Berechnung, |
| v: | Fahrgeschwindigkeit zum augenblicklichen Zeitpunkt, |
| Dt: | Zeitintervall zwischen zwei Iterationsschritten). |

**4.** Verfahren nach Anspruch 3, **dadurch gekennzeichnet**, daß die Einfahrt in eine und die Ausfahrt des Fahrzeugs (1) aus einer Seitenwindböe (42) aus den Werten des gemessenen Differenzdrucks (Dp) erfaßt und in Abhängigkeit davon der einzustellende Zusatzlenkwinkel ($delta_z$) über die Gleichung (Gl. 11) mit unterschiedlichen Parametersätzen ($T_{1,g,Ein}$, $T_{D,g,Ein}$; $T_{1,g,Aus}$, $T_{D,g,Aus}$) berechnet werden.

**5.** Verfahren nach Anspruch 4, **dadurch gekennzeichnet**, daß die Berechnung des einzustellenden Zusatzlenkwinkels ($delta_z$) über die Gleichung (Gl. 11) zumindest so lange mit dem unmittelbar vorher ausgewählten Parametersatz ($T_{1,g,Ein}$, $T_{D,g,Ein}$ beziehungsweise $T_{1,g,Aus}$, $T_{D,g,Aus}$) fortgesetzt wird, wie der einzustellende Zusatzlenkwinkel ($delta_z$) als Reaktion auf eine unmittelbar vorausgegangene Änderung der Windseitenkraft ($F_w$) verstellt wird oder wie sich noch keine signifikante Änderung der Windseitenkraft ($F_w$) ergeben hat.

**6.** Verfahren nach Anspruch 4 oder 5, **dadurch gekennzeichnet**, daß zur Erfassung des Einfahrens in eine und des Ausfahrens des Fahrzeugs (1) aus einer Seitenwindböe (42) die Werte der berechneten Windseitenkraft ($F_{W,k}$) oder die erfaßten Werte des Differenzdrucks (Dp) mit einem Tiefpaß gefiltert (gefilterte Windseitenkraftwerte $F_{Wf,k}$) werden und die Differenz ($DF_{Wf} = |F_{Wf,k}| - |F_{Wf,k-1}|$) der Beträge der zum augenblicklichen Zeitpunkt und zum Zeitpunkt der letzten Berechnung bestimmten gefilterten Windseitenkraftwerte ($|F_{Wf,k}|$, $|F_{Wf,k-1}|$) gebildet und mit einem windseitenkraftabhängigen Schwellwert ($-Schw^*|F_{Wf,k-1}|$ oder $-Schw^*|F_{Wf,k}|$) verglichen wird, wobei das Einfahren in die Seitenwindböe (42) erkannt wird, sofern die Differenz ($DF_{Wf} = |F_{Wf,k}| - |F_{Wf,k-1}|$) der gefilterten Windseitenkraftwerte größer als der windseitenkraftabhängige Schwellwert ist ($DF_{Wf} > -Schw^*|F_{Wf,k-1}|$) und das Ausfahren aus der Seitenwindböe (42) erkannt wird, sofern die Differenz ($DF_{Wf} = |F_{Wf,k}| - |F_{Wf,k-1}|$) der gefilterten Windseitenkraftwerte kleiner als der windseitenkraftabhängige Schwellwert ist ($DF_{Wf} < -Schw^*|F_{Wf,k-1}|$).

**7.** Verfahren nach Anspruch 6, **dadurch gekennzeichnet**, daß die Filterung der Windseitenkraftwerte ($F_{Wf,k}$) durch einen Tiefpaß mit einer Grenzfrequenz im Bereich von 0,2 Hz erfolgt.

**8.** Verfahren nach wenigstens einem der vorangehenden Ansprüche, **dadurch gekennzeichnet**, daß die Druckabnahmepunkte (18, 19) symmetrisch zur senkrecht verlaufenden Längsebene des Fahrzeugs (1) an dessen Vorderbau angeordnet werden.

**9.** Verfahren nach Anspruch 8, **dadurch gekennzeichnet**, daß die Druckabnahmepunkte (18, 19) am linken und rechten vorderen Kotflügel angeordnet werden.

**10.** Verfahren nach Anspruch 8 oder 9, **dadurch gekennzeichnet**, daß die Druckabnahmepunkte (18, 19) derart angeordnet werden, daß sie selbst bei großen Beträgen des Winkels (Schiebewinkel alpha) zwischen Fahrzeuglängsachse und des Summenvektors ($v_{Res}$) aus Fahrgeschwindigkeitsvektor (v) und Windgeschwindigkeitsvektor ($v_W$) nicht in Gebieten abgelöster Luftströmung liegen.

**11.** Verfahren nach wenigstens einem der vorangehenden Ansprüche, **dadurch gekennzeichnet**, daß die Druckabnahmepunkte (18, 19) auf der Karosserieaußenhaut angebracht werden oder als Bohrungen (19, 20) in der Karosserieaußenhaut ausgeführt werden und zentral zwischen beiden Druckabnahmepunkten (18, 19) ein Differenzdruckaufnehmer (22) angeordnet wird, der mit den beiden Bohrungen (19, 20) über möglichst gleichlange Schläuche oder Rohrleitungen (23, 24) verbunden wird.

**12.** Verfahren nach wenigstens einem der vorangehenden Ansprüche, **dadurch gekennzeichnet**, daß das Druckaufnehmersystem (25; 15, 18 bis 24) derart abgestimmt wird, daß an der Karosserieoberfläche auftretende Druckschwankungen in einem Frequenzbereich von 0 Hertz bis zu etwa 5 Hertz vom Differenzdruckaufnehmer (22) nur unwesentlich verfälscht durch Absorption, Reflexion, und Resonanzen aufgenommen wird.

**13.** Verfahren nach wenigstens einem der vorangehenden Ansprüche, **dadurch gekennzeichnet**, daß ein dem Differenzdruckaufnehmer (22) entnommenes den Differenzdruck repräsentierendes Signal über fahrzeugtypabhängige und druckbohrungslageabhängige Korrekturwerte in eine auf das Fahrzeug (1) wirkende aus dem Seitenwind resultierende Seitenkraft umgewandelt wird.

**14.** Vorrichtung zur Minimierung des Seitenwind-Einflusses auf das Fahrverhalten eines durch einen Fahrzeugführer willkürlich lenkbaren wenigstens zweiachsigen Fahrzeugs (1), wobei gegenüberliegend an den Seiten des Fahrzeugs (1) Druckabnahmepunkte (18, 19) zur Messung des im Bereich der Karosserieaußenhaut anstehenden Luftdrucks angeordnet sind, und ein auf den Differenzdruck (Dp) zwischen den Druckabnahmepunkten (18, 19) beider Fahrzeugseiten ansprechendes Stellglied (11,12) an einer Achse (zweite Achse 6) gegen den Einfluß des Seitenwinds gerichtete Lenkbewegungen erzeugt, **dadurch gekennzeichnet**, daß ein Steuergerät (15) das Stellglied (11, 12) für den Lenkwinkel an der Achse (zweite Achse 6, Hinterachslenkwinkel $delta_h$) derart einstellt, daß die durch die aus dem durch Messung mittels eines Differenzdruckaufnehmers (22) erfaßten Differenzdruck (Dp) bestimmte auf das Fahrzeug wirkende Windseitenkraft ($F_W$) bewirkte Gierwinkeländerung (Gierwinkelgeschwindigkeit dpsi/dt, Gierwinkelbeschleunigung $d^2psi/dt^2$) des Fahrzeugs gegen Null geht (dpsi/dt --> 0, $d^2psi/dt^2$ --> 0).

**15.** Vorrichtung nach Anspruch 14, **dadurch gekennzeichnet**, daß das Steuergerät (15) mittels eines Digitalrechners aufgebaut ist, welcher den einzustellende Zusatzlenkwinkel ($delta_z$) bestimmt zu:

$$(delta_{z,k}=\frac{T_{1,g}*v*delta_{z,k-1}+V_g*(F_{W,k}*Dt+T_{D,g}*v*(F_{W,k}-F_{W,k-1}))}{T_{1,g}*v+Dt}, \qquad (Gl.\ 11)$$

mit:

| | |
|---|---|
| $T_{1,g}$, $T_{D,g}$ und $V_g$: | Porportionalitätsfaktoren, |
| $delta_{z,k}$: | Zusatzlenkwinkel zum augenblicklichen Zeitpunkt, |
| $delta_{z,k-1}$: | Zusatzlenkwinkel zum Zeitpunkt der letzten Berechnung, |
| $F_{W,k}$: | Windseitenkraft zum augenblicklichen Zeitpunkt, |
| $F_{W,k-1}$: | Windseitenkraft zum Zeitpunkt der letzten Berechnung, |
| v: | Fahrgeschwindigkeit zum augenblicklichen Zeitpunkt, |
| Dt: | Zeitintervall zwischen zwei Iterationsschritten). |

**16.** Vorrichtung nach Anspruch 15, **dadurch gekennzeichnet**, daß das Steuergerät (15) aus den Werten des gemessenen Differenzdrucks (Dp) die Einfahrt in eine und die Ausfahrt des Fahrzeugs aus einer Seitenwindböe (42) erfaßt und in Abhängigkeit davon der einzustellende Zusatzlenkwinkel ($delta_z$) über die Gleichung (Gl. 11) mit unterschiedlichen Parametersätzen ($T_{1,g,Ein}$, $T_{D,g,Ein}$; $T_{1,g,Aus}$, $T_{D,g,Aus}$) berechnet.

**17.** Vorrichtung nach Anspruch 16, **dadurch gekennzeichnet**, daß das Steuergerät die Berechnung des einzustellenden Zusatzlenkwinkels ($delta_z$) über die Gleichung (Gl. 1) zumindest so lange mit dem unmittelbar vorher ausgewählten Parametersatz ($T_{1,g,Ein}$, $T_{D,g,Ein}$ beziehungsweise $T_{1,g,Aus}$, $T_{D,g,Aus}$) fortsetzt, wie es den Zusatzlenkwinkel ($delta_z$) als Reaktion auf eine unmittelbar vorausgegangene Änderung der Windseitenkraft ($F_w$) verstellt oder wie sich noch keine signifikante Änderung der Windseitenkraft ($F_w$) ergeben hat.

**18.** Vorrichtung nach Anspruch 16 oder 17, **dadurch gekennzeichnet**, daß das Steuergerät (15) zur Erfassung des Einfahrens in eine und des Ausfahrens des Fahrzeugs aus einer Seitenwindböe (42) die Werte der berechneten Windseitenkraft ($F_{W,k}$) oder die erfaßten Werte des Differenzdrucks (Dp) mit einem Tiefpaß filtert (gefilterte Windseitenkraftwerte $F_{Wf,k}$) und die Differenz ($DF_{Wf}=|F_{Wf,k}|-|F_{Wf,k-1}|$) der Beträge der zum augenblicklichen Zeitpunkt und zum Zeitpunkt der letzten Berechnung bestimmten gefilterten Windseitenkraftwerte ($|F_{Wf,k}|$, $|F_{Wf,k-1}|$) bildet und mit einem windseitenkraftabhängigen Schwellwert ($-Schw*|F_{Wf,k-1}|$ oder $-Schw*|F_{Wf,k}|$) vergleicht, wobei das Steuergerät

- ein Einfahren in die Seitenwindböe (42) erkennt, sofern die Differenz ($DF_{Wf}=|F_{Wf,k}|-|F_{Wf,k-1}|$) der gefilterten Windseitenkraftwerte größer als der windseitenkraftabhängige Schwellwert ist ($DF_{Wf}>-Schw*|F_{Wf,k-1}|$) und

- ein Ausfahren aus der Seitenwindböe (42) erkennt, sofern die Differenz ($DF_{Wf} = |F_{Wf,k}|-|F_{Wf,k-1}|$) der gefilterten Windseitenkraftewerte kleiner als der windseitenkraftabhängige Schwellwert ist ($DF_{Wf}$<-Schw*$|F_{Wf,k-1}|$).

**19.** Vorrichtung nach Anspruch 18, **dadurch gekennzeichnet**, daß die Filterung der Windseitenkraftwerte ($F_{Wf,k}$) durch einen Tiefpaß mit einer Grenzfrequenz im Bereich von 0,2 Hz erfolgt.

**20.** Vorrichtung nach wenigstens einem der vorangehenden Ansprüche 14 bis 19, **dadurch gekennzeichnet**, daß die Druckabnahmepunkte (18, 19) symmetrisch zur senkrecht verlaufenden Längsebene des Fahrzeugs (1) an dessen Vorderbau angeordnet sind.

**21.** Vorrichtung nach Anspruch 20, **dadurch gekennzeichnet**, daß die Druckabnahmepunkte (18, 19) am linken und rechten vorderen Kotflügel angeordnet sind.

**22.** Vorrichtung nach Anspruch 20 oder 21, **dadurch gekennzeichnet**, daß die Druckabnahmepunkte (18, 19) derart angeordnet sind, daß sie selbst bei großen Beträgen des Winkels (Schiebewinkel alpha) zwischen Fahrzeuglängsachse und des Summenvektors ($v_{Res}$) aus Fahrgeschwindigkeitsvektor (v) und Windgeschwindigkeitsvektor ($v_W$) nicht in Gebieten abgelöster Luftströmung liegen.

**23.** Vorrichtung nach wenigstens einem der vorangehenden Ansprüche 14 bis 22, **dadurch gekennzeichnet**, daß die Druckabnahmepunkte (18, 19) als Bohrungen (20, 21) in der Karosserieaußenhaut ausgeführt sind und der Differenzdruckaufnehmer (22) zentral zwischen beiden Druckabnahmepunkten (18, 19) angeordnet ist, der mit den beiden Bohrungen (20, 21) über möglichst gleichlange Schläuche oder Rohrleitungen (23, 24) verbunden ist.

**24.** Vorrichtung nach wenigstens einem der vorangehenden Ansprüche 14 bis 23, **dadurch gekennzeichnet**, daß das Druckaufnehmersystem (22, 15, 18 bis 24) derart abgestimmt ist, daß es die an der Karosserieoberfläche auftretenden Druckschwankungen in einem Frequenzbereich von 0 Hertz bis zu etwa 5 Hertz nur unwesentlich verfälscht durch Absorption, Reflexion, und Resonanzen aufnimmt.

**25.** Vorrichtung nach wenigstens einem der vorangehenden Ansprüche 14 bis 23, **dadurch gekennzeichnet**, daß ein dem Differenzdruckaufnehmer (22) entnommenes den Differenzdruck repräsentierendes Signal über fahrzeugtypabhängige und druckbohrungslageabhängige Korrekturwerte in eine auf das Fahrzeug (1) wirkende aus dem Seitenwind resultierende Seitenkraft umgewandelt ist.

## Claims

**1.** A method of minimising the effect of side wind on the behaviour of a travelling vehicle (1) which can be steered at will by a driver and has at least two axles, wherein pressure take-off points (18, 19) are disposed opposite one another on the sides of the vehicle (1) for measurement of the air pressure occurring in the region of the outer shell of the vehicle body, and by means of a setting member (11, 12) which responds to the differential pressure (Dp) between the pressure take-off points (18, 19) on both sides of the vehicle steering movements are produced on one axle which are directed against the effect of the side wind, characterised in that by means of the setting member (11, 12) an additional steering angle ($delta_z$) is set on one axle in such a way that the change in the yawing angle (yawing angle speed dpsi/dt, yawing angle acceleration $d^2psi/dt^2$) of the vehicle (1) caused by the side wind force ($F_W$) acting on the vehicle (1) tends towards zero (dpsi/dt --> 0, $d^2psi/dt^2$ -->0), the said side wind force being defined by the differential pressure (Dp) determined by measurement.

**2.** A method according to Claim 1, characterised in that the additional steering angle ($delta_z$) to be set is determined by solving the differential equation of the travel-dynamic single-track linear model resulting from the equation of motion of the vehicle (1) about the vertical axis running round the centre of gravity of the vehicle (1) (yawing moment equilibrium), with the change in the yawing angle (yawing angle speed dpsi/dt, yawing angle acceleration $d^2psi/dt^2$) equal to zero (dpsi/dt = 0, $d^2psi/dt^2 = 0$) and side wind force $F_W = K_p*Dp$; $K_p$: proportionality factor) proportional to the pressure difference (Dp).

**3.** A method according to Claim 1 or 2, characterised in that the additional steering angle ($delta_z$) to be set is determined numerically by means of a digital computer (15), the additional steering angle ($delta_z$,

$delta_{z,k}$) to be set being produced in the k-th computer pass in the time interval (Dt) as:

$$(delta_{z,k} = \frac{T_{1,g}*v*delta_{z,k-1} + V_g*(F_{W,k}*Dt + T_{D,g}*v*(F_{W,k} - F_{W,k-1}))}{T_{1,g}*v + Dt}, \quad \text{(Eq. 11)}$$

with:

| | |
|---|---|
| $T_{1,g}$, $T_{D,g}$ and $V_g$: | coefficients |
| $delta_{z,k}$: | additional steering angle at the current point in time, |
| $delta_{z,k-1}$: | additional steering angle at the time of the last calculation, |
| $F_{W,k}$: | side wind force at the current point in time, |
| $F_{W,k-1}$: | side wind force at the time of the last calculation, |
| v: | travelling speed at the current point in time, |
| Dt: | time interval between two iteration steps). |

**4.** A method according to Claim 3, characterised in that travel of the vehicle (1) into and out of a gust of side wind (42) is determined from the values of the measured differential pressure (Dp) and depending thereon the additional steering angle ($delta_z$) to be set is calculated using the equation (Eq. 11) with different sets of parameters ($T_{1,g,Ein}$, $T_{D,g,Ein}$; $T_{1,g,Aus}$, $T_{D,g,Aus}$).

**5.** A method according to Claim 4, characterised in that the calculation of the additional steering angle ($delta_z$) to be set using the equation (Eq. 11) is continued with the set of parameters selected immediately beforehand ($T_{1,g,Ein}$, $T_{D,g,Ein}$ or $T_{1,g,Aus}$, $T_{D,g,Aus}$ respectively) at least so long as the additional steering angle ($delta_z$) to be set is adjusted as a reaction to an immediately preceding change in the side wind force ($F_W$) or so long as no significant change in the side wind force ($F_W$) has yet occurred.

**6.** A method according to Claim 4 or 5, characterised in that in order to determine travel of the vehicle (1) into and out of a gust of side wind (42) the values of the calculated side wind force ($F_{W,k}$) or the determined values of the differential pressure (Dp) are filtered with a low-pass filter (filtered side wind force values $F_{Wf,k}$) and the difference ($DF_{Wf} = |F_{Wf,k}| - |F_{Wf,k-1}|$) between the amounts of the filtered side wind force values ($|F_{Wf,k}|$, $|F_{Wf,k-1}|$) determined at the current point in time and at the time of the last calculation is formed and compared with a threshold value ($-Schw*|F_{Wf,k-1}|$ or $-Schw*|F_{Wf,k}|$) which is dependent upon the side wind force, travel into the gust of side wind (42) being recognised provided that the difference ($DF_{Wf} = |F_{Wf,k}| - |F_{Wf,k-1}|$) between the filtered side wind force values is greater than the threshold value ($DF_{Wf} > -Schw*|F_{Wf,k-1}|$) which is dependent upon the side wind force, and travel out of the gust of side wind (42) being recognised provided that the difference ($DF_{Wf} = |F_{Wf,k}| - |F_{Wf,k-1}|$) between the filtered side wind force values is less than the threshold value ($DF_{Wf} < -Schw*|F_{Wf,k-1}|$). which is dependent upon the side wind force.

**7.** A method according to Claim 6, characterised in that the filtering of the side wind force values ($F_{Wf,k}$) is carried out by a low-pass filter with a limiting frequency in the region of 0.2 Hz.

**8.** A method according to at least one of the preceding claims, characterised in that the pressure take-off points (18, 19) are disposed symmetrically with respect to the vertically extending longitudinal plane of the vehicle (1) on the front structure thereof.

**9.** A method according to Claim 8, characterised in that the pressure take-off points (18, 19) are disposed on the left and right front wings.

**10.** A method according to Claim 8 or 9, characterised in that the pressure take-off points (18, 19) are disposed in such a way that they do not lie in zones of detached air flow even in the case of large magnitudes of the angle (angle of sideslip alpha) between the longitudinal axis of the vehicle and the sum vector ($v_{Res}$) of the travel speed vector (v) and the wind speed vector ($v_W$).

**11.** A method according to at least one of the preceding claims, characterised in that the pressure take-off points (18, 19) are attached to the outer shell of the bodywork or are constructed as holes (19, 20) in the outer shell of the bodywork, and a differential pressure sensor (22), which is connected to the two holes (19, 20) by hoses or pipes (23, 24) which are as far as possible of equal length, is disposed centrally between the two pressure take-off points (18, 19).

**12.** A method according to at least one of the preceding claims, characterised in that the pressure sensor system (25; 15, 18 to 24) is tuned in such a way that pressure fluctuations occurring on the surface of the bodywork are sensed in a frequency range from 0 Hertz up to approximately 5 Hertz by the differential pressure sensor (22) with only insignificant falsification by absorption, reflection and resonances.

**13.** A method according to at least one of the preceding claims, characterised in that a signal taken from the differential pressure sensor (22) and representing the differential pressure is converted, using correction values which are dependent upon the model of vehicle and upon the position of the pressure hole, into a side force acting on the vehicle (1) and resulting from the side wind.

**14.** Apparatus for minimising the effect of side wind on the behaviour of a travelling vehicle (1) which can be steered at will by a driver and has at least two axles, wherein pressure take-off points (18, 19) are disposed opposite one another on the sides of the vehicle (1) for measurement of the air pressure occurring in the region of the outer shell of the vehicle body, and a setting member (11, 12) which responds to the differential pressure (Dp) between the pressure take-off points (18, 19) on both sides of the vehicle produces steering movements on one axle (second axle 6) which are directed against the effect of the side wind, characterised in that a control device (15) sets the setting member (11, 12) for the steering angle on the axle (second axle 6, rear axle steering angle $delta_h$) in such a way that the change in the yawing angle (yawing angle speed dpsi/dt, yawing angle acceleration $d^2psi/dt^2$) of the vehicle caused by the side wind force ($F_W$) acting on the vehicle tends towards zero (dpsi/dt --> 0, $d^2psi/dt^2$ -->0), the said side wind force being defined by the differential pressure (Dp) determined by measurement by means of a differential pressure sensor (22).

**15.** Apparatus according to Claim 14, characterised in that the control device (15) is made up of a digital computer which determines the additional steering angle ($delta_z$) to be set as:

$$(delta_{z,k} = \frac{T_{1,g}*v*delta_{z,k-1} + V_g*(F_{W,k}*Dt + T_{D,g}*v*(F_{W,k} - F_{W,k-1}))}{T_{1,g}*v + Dt}, \quad (Eq.\ 11)$$

with:

| | |
|---|---|
| $T_{1,g}$, $T_{D,g}$ and $V_g$: | proportionality factors |
| $delta_{z,k}$: | additional steering angle at the current point in time, |
| $delta_{z,k-1}$: | additional steering angle at the time of the last calculation, |
| $F_{W,k}$: | side wind force at the current point in time, |
| $F_{W,k-1}$: | side wind force at the time of the last calculation, |
| v: | travelling speed at the current point in time, |
| Dt: | time interval between two iteration steps). |

**16.** Apparatus according to Claim 15, characterised in that the control device (15) determines travel of the vehicle into and out of a gust of side wind (42) from the values of the measured differential pressure (Dp) and depending thereon calculates the additional steering angle ($delta_z$) to be set using the equation (Eq. 11) with different sets of parameters ($T_{1,g,Ein}$, $T_{D,g,Ein}$; $T_{1,g,Aus}$, $T_{D,g,Aus}$).

**17.** Apparatus according to Claim 16, characterised in that the control device continues the calculation of the additional steering angle ($delta_z$) to be set using the equation (Eq. 1) with the set of parameters selected immediately beforehand ($T_{1,g,Ein}$, $T_{D,g,Ein}$ or $T_{1,g,Aus}$, $T_{D,g,Aus}$ respectively) at least so long as the additional steering angle ($delta_z$) to be set is adjusted as a reaction to an immediately preceding change in the side wind force ($F_W$) or so long as no significant change in the side wind force ($F_W$) has yet occurred.

**18.** Apparatus according to Claim 16 or 17, characterised in that in order to detect travel of the vehicle (1) into and out of a gust of side wind (42) the control device (15) filters the values of the calculated side wind force ($F_{W,k}$) or the determined values of the differential pressure (Dp) with a low-pass filter (filtered side wind force values $F_{Wf,k}$) and forms the difference ($DF_{Wf} = |F_{Wf,k}|-|F_{Wf,k-1}|$) between the amounts of the filtered side wind force values ($|F_{Wf,k}|$, $|F_{Wf,k-1}|$) determined at the current point in time and at the time of the last calculation and compares it with a threshold value ($-Schw^*|F_{Wf,k-1}|$ or $-Schw^*|F_{Wf,k}|$) which is dependent upon the side wind force, wherein the control device

- recognises travel into the gust of side wind (42) provided that the difference ($DF_{Wf} = |F_{Wf,k}|-|F_{Wf,k-1}|$) between the filtered side wind force values is greater than the threshold value ($DF_{Wf}>-Schw^*|F_{Wf,k-1}|$), which is dependent upon the side wind force, and
- recognises travel out of the gust of side wind (42) provided that the difference ($DF_{Wf} = |F_{Wf,k}|-|F_{Wf,k-1}|$) between the filtered side wind force values is less than the threshold value ($DF_{Wf}<-Schw^*|F_{Wf,k-1}|$) which is dependent upon the side wind force.

**19.** Apparatus according to Claim 18, characterised in that the filtering of the side wind force values ($F_{Wf,k}$) is carried out by a low-pass filter with a limiting frequency in the region of 0.2 Hz.

**20.** Apparatus according to at least one of the preceding Claims 14 to 19, characterised in that the pressure take-off points (18, 19) are disposed symmetrically with respect to the vertically extending longitudinal plane of the vehicle (1) on the front structure thereof.

**21.** Apparatus according to Claim 20, characterised in that the pressure take-off points (18, 19) are disposed on the left and right front wings.

**22.** Apparatus according to Claim 20 or 21, characterised in that the pressure take-off points (18, 19) are disposed in such a way that they do not lie in zones of detached air flow even in the case of large magnitudes of the angle (angle of sideslip alpha) between the longitudinal axis of the vehicle and the sum vector ($v_{Res}$) of the travel speed vector (v) and the wind speed vector ($v_W$).

**23.** Apparatus according to at least one of the preceding Claims 14 to 22, characterised in that the pressure take-off points (18, 19) are constructed as holes (20, 21) in the outer shell of the bodywork, and a differential pressure sensor (22), which is connected to the two holes (20, 21) by hoses or pipes (23, 24) which are as far as possible of equal length, is disposed centrally between the two pressure take-off points (18, 19).

**24.** Apparatus according to at least one of the preceding Claims 14 to 23, characterised in that the pressure sensor system (22, 15, 18 to 24) is tuned in such a way that it senses pressure fluctuations occurring on the surface of the bodywork in a frequency range from 0 Hertz up to approximately 5 Hertz by the differential pressure sensor (22) with only insignificant falsification by absorption, reflection and resonances.

**25.** Apparatus according to at least one of the preceding Claims 14 to 23, characterised in that a signal taken from the differential pressure sensor (22) and representing the differential pressure is converted, using correction values which are dependent upon the model of vehicle and upon the position of the pressure hole, into a side force acting on the vehicle (1) and resulting from the side wind.

## Revendications

**1.** Procédé pour minimiser l'influence du vent latéral sur la tenue de route d'un véhicule (1) à au moins deux essieux, pouvant être guidé à volonté par un conducteur, où, de part et d'autre, sur les côtés du véhicule (1) sont disposés des points de prélèvement de pression (18, 19) pour mesurer la pression d'air arrivant sur la peau extérieure de carrosserie et des mouvements directionnels orientés à l'encontre de l'influence du vent latéral sont produits sur un axe, au moyen d'un organe de réglage (11, 12) réagissant à la différence de pression (Dp) entre les points de prélèvement de pression (18), des deux côtés du véhicule, caractérisé en ce que, au moyen de l'organe de réglage (11, 12), un angle de braquage additionnel ($delta_z$) est réglé sur un essieu, de manière que la variation d'angle de lacet (vitesse d'angle de lacet dpsi/dt, accélération d'angle de lacet $d^2psi/dt^2$) du véhicule (1), provoquée suite à la force due au vent latéral ($F_W$), agissant sur le véhicule (1) et déterminée à partir de la pression différentielle (Dp) appréhendée par mesure, tende vers zéro (dpsi/dt --> 0, $d^2psi/dt^2$ --> 0).

2. Procédé selon la revendication 1, caractérisé en ce que l'angle de braquage supplémentaire ($delta_z$) à régler est déterminé par résolution de équation différentielle du modèle de roulement dynamique linéaire et mono-voie résultant de l'équation de mouvement du véhicule (1), autour de l'axe vertical passant par le centre de gravité du véhicule (1) (équilibre des moments de lacet), avec une variation de l'angle de lacet (vitesse d'angle de lacet dpsi/dt, accélération d'angle de lacet $d^2psi/dt^2$) égale à zéro (dpsi/dt, $d^2psi/dt^2=0$) et une force due au vent latéral ($F_W=K_p*Dp$; $K_p$ : facteur de proportionnalité) proportionnelle à la différence de pression (Dp).

3. Procédé selon la revendication 1 ou 2, caractérisé en ce que l'angle de braquage additionnel ($delta_z$) à régler est déterminé numériquement au moyen d'un calculateur numérique (15), l'angle de braquage additionnel ($delta_z$, $delta_{z,k}$ ) à régler au kième cycle de calcul, à l'intervalle de temps (Dt), étant donné par :

$$(delta_{z,k} = \frac{T_{1,g}*v*delta_{z,k-1}+V_g*(F_{W,k}*Dt+T_{D,g}*v*(F_{W,k}-F_{W,k-1}))}{T_{1,g}*v+Dt},$$

(Gl.11)

avec :
$T_{1,g}$, $T_{D,g}$ et $V_g$ : coefficients,
$delta_{z,k}$ : angle de braquage additionnel instantané,
$delta_{z,k-1}$ : angle de braquage additionnel au moment du dernier calcul,
$F_{W,k}$ : effort dû au vent latéral instantané,
$F_{W,k-1}$ : effort dû au vent latéral au moment du dernier calcul,
v : vitesse de roulage instantanée,
Dt ; intervalle de temps entre deux étapes d'itération).

4. Procédé selon la revendication 3, caractérisé en ce que l'entrée dans une rafale de vent latérale (42) et la sortie du véhicule (1) de cette rafale de vent est appréhendée à partir des valeurs de pression différentielle (Dp) mesurées et, en fonction de cela, l'angle de braquage additionnel ($delta_z$) réglé est calculé par l'équation (Gl. 11), avec différents jeux de paramètre ($T_{1,g,Ein}$, $T_{D,g,Ein}$; $T_{1,g,Aus}$, $T_{D,g,Aus}$).

5. Procédé selon la revendication 4, caractérisé en ce que le calcul de l'angle de braquage supplémentaire ($delta_z$) réglé est continué pendant au moins la durée pendant laquelle, avec le jeu de paramètres ($T_{1,g,Ein}$, $T_{D,g,Ein}$, respectivement $T_{1,g,Aus}$, $T_{D,g,Aus}$) ayant été directement sélectionné auparavant, ainsi que l'angle de braquage additionnel ($delta_z$) à régler, on a opéré un réglage à titre de réaction à la valeur d'une modification directement antérieure de la force due au vent latéral ($F_W$) ou bien d'une durée pendant laquelle aucune variation significative de la force due au vent latéral ($F_W$) s'est produite.

6. Procédé selon la revendication 4 ou 5, caractérisé en ce que, pour appréhender l'entrée ou la sortie du véhicule (1) d'une rafale de vent latéral, on filtre avec un filtre passe-bas (valeurs de force due au vent latéral filtrées $F_{Wf,k}$) les valeurs de la force due au vent latéral ($F_{W,k}$) calculée ou les valeurs appréhendées de la pression différentielle (Dp) et l'on forme la différence ($DF_{Wf} = |F_{Wf,k}|-|F_{Wf,k-1}|$) des valeurs de force due au vent latéral ($|F_{Wf,k}|-|F_{Wf,k-1}|$) filtrées déterminées au moment instantané et au moment du dernier calcul, et l'on compare avec une valeur de seuil ($-Schw*|F_{Wf,k-1}|$ ou $-Schw*|F_{Wf,k}|$) dépendant de la force due au vent latéral, l'entrée dans une rafale de vent latéral (42) étant identifiée dans la mesure où la différence ($DF_{Wf} = |F_{Wf,k}|-|F_{Wf,k-1}|$) entre les valeurs dues au vent latéral filtrées est supérieure à la valeur de seuil dépendant de la force due au vent latéral ($DF_{Wf}>-Schw*|F_{Wf,k-1}|$) et la sortie de la rafale de vent latéral (42) étant identifiée dans la mesure où la différence ($DF_{Wf} = |F_{Wf,k}|-|F_{Wf,k-1}|$) entre les valeurs de force due au vent latéral filtrées est inférieure à la valeur de seuil dépendant de la force due au vent latéral ($DF_{Wf}<-Schw*|F_{Wf,k-1}|$).

**7.** Procédé selon la revendication 6, caractérisé en ce que le filtrage des valeurs de farce due au vent latéral ($F_{Wf,k}$) s'effectue au moyen d'un filtre passe-bas avec une fréquence limite de l'ordre de 0,2 Hz.

**8.** Procédé selon au moins l'une des revendications précédentes, caractérisé en ce que les points de prélèvement de pression (18, 19) sont disposés symétriquement par rapport au plan longitudinal vertical du véhicule (1), sur sa partie avant.

**9.** Procédé selon la revendication 8, caractérisé en ce que les points de prélèvement de pression (18, 19) sont disposés sur les ailes avant gauche et droite.

**10.** Procédé selon la revendication 8 ou 9, caractérisé en ce que les points de prélèvement de pression (18, 19) sont disposés de manière à ce qu'ils ne se trouvent pas dans les zones où il y a un décollement de l'écoulement d'air, même en cas de grande valeur de l'angle (angle de déplacement alpha) entre l'axe longitudinal de véhicule et le vecteur somme ($v_{Res}$) constitué du vecteur de vitesse de roulage (v) et du vecteur de vitesse du vent ($v_W$).

**11.** Procédé selon au moins l'une des revendications précédentes, caractérisé en ce que les points de prélèvement de pression (18, 19) sont situés sur la peau extérieure de la carrosserie ou bien réalisés sous forme de perçages (18, 19) ménagés dans la peau extérieure de carrosserie et centralement, entre les deux points de prélèvement de pression (18, 19), étant disposé un capteur de pression différentielle (22), relié aux deux perçages (18, 19) par l'intermédiaire de tuyaux ou de tubes (23, 24) ayant autant que possible la même longueur.

**12.** Procédé selon au moins l'une des revendications précédentes, caractérisé en ce que le système de capteur de pression (25; 15, 18 à 24) est conçu de manière que les fluctuations de pression se produisant sur la surface de la carrosserie soient enregistrées par le capteur de pression différentielle en n'étant fausses que d'une façon non notable par absorption, réflexion et résonance , lorsqu'elles se situent dans une plage de fréquence allant de 0 Hertz à environ 5 Hertz.

**13.** Procédé selon au moins l'une des revendications précédentes, caractérisé en ce qu'un signal, prélevé du capteur de pression différentielle (22) et représentant la pression différentielle, est converti, par l'intermédiaire de valeurs de correction fonction du type du véhicule et fonction de la position des perçages de pression, en une force latérale agissant sur le véhicule (1) et résultant de l'action du vent latéral.

**14.** Dispositif pour minimiser l'influence du vent latéral sur la tenue de route d'un véhicule (1) à au mains deux essieux susceptible d'être guidé à volonté par un conducteur, des points de prélèvement de pression (18, 19) étant disposés à l'opposé sur les côtés du véhicule, pour assurer la mesure de la pression d'air arrivant sur la peau extérieure de carrosserie et un organe de réglage (11, 12) réagissant à la pression différentielle (Dp) existant entre les points de prélèvement de pression (18, 19) des deux côtés du véhicule produisant des mouvements directionnels sur un axe (deuxième axe 6) orienté à l'encontre de l'influence du vent latéral, caractérisé en ce qu'un appareil de commande (15) règle l'organe de réglage (11, 12) de l'angle de braquage sur l'axe (deuxième axe 6, angle de braquage d'essieu arrière $delta_n$), de manière que la variation d'angle de lacet (vitesse d'angle de lacet dpsi/dt, accélération d'angle de lacet $d^2psi/dt^2$) du véhicule, provoquée suite à la force due au vent latéral ($F_W$), agissant sur le véhicule et déterminée à partir de la pression différentielle (Dp) appréhendée par mesure au moyen d'un capteur de pression différentielle (22), tende vers zéro (dpsi/dt --> 0, $d^2psi/dt^2$ --> 0).

**15.** Dispositif selon la revendication 14, caractérisé en ce que l'appareil de commande (15) est construit au moyen d'un calculateur numérique qui détermine l'angle de braquage additionnel ($delta_z$) à régler en fonction de :

$$(delta_{z,k} = \frac{T_{1,g}*v*delta_{z,k-1}+V_g*(F_{W,k}*Dt+T_{D,g}*v*(F_{W,k}-F_{W,k-1}))}{T_{1,g}*v+Dt},$$

avec :

$T_{1,g}$, $T_{D,g}$ et $V_g$ : coefficients de proportionnalité,
$delta_{z,k}$ : angle de braquage additionnel instantané,
$delta_{z,k-1}$ : angle de braquage additionnel au moment du dernier calcul,
$F_{W,k}$ : effort dû au vent latéral instantané,
$F_{W,k-1}$ : effort dû au vent latéral au moment du dernier calcul,
v : vitesse de roulage instantanée,
Dt : intervalle de temps entre deux étapes d'itération).

**16.** Dispositif selon la revendication 15, caractérisé en ce que l'appareil de commande (15) appréhende, à partir des valeurs de la pression différentielle (Dp) mesurée, l'entrée du véhicule dans une rafale de vent latérale (42) et la sortie du véhicule d'une rafale de vent (42) et, en fonction de cela, calcule l'angle de braquage additionnel ($delta_z$) à régler par l'intermédiaire l'équation (Gl. 11), avec différents jeux de paramètres ($T_{1,g,Ein}$, $T_{D,g,Ein}$;$T_{1,g,Aus}$, $T_{D,g,Aus}$).

**17.** Dispositif selon la revendication 16, caractérisé en ce que l'appareil de commande continue le calcul de l'angle de braquage additionnel ($delta_z$) à régler par l'intermédiaire de l'équation (Gl. 11) au mains pendant la durée où, avec le jeu de paramètres ($T_{1,g,Ein}$, $T_{D,g,Ein}$ ou $T_{1,g,Aus}$, $T_{D,g,Aus}$) directement sélectionné auparavant, on a opéré un réglage, à titre de réaction à une variation directement antérieure de la force due au vent latéral ($F_{W)}$, ou bien qu'il n'y a encore eu aucune modification significative de la force due au vent latéral ($F_W$).

**18.** Dispositif selon la revendication 16 au 17, caractérisé en ce que l'appareil de commande (15), pour appréhender l'entrée dans une rafale de vent latéral (42) et la sortie du véhicule de la rafale de vent latéral (42), filtre avec un filtre passe-bas (valeurs de force due au vent latéral filtrées $F_{Wf,k}$) les valeurs de la force de vent latéral ($F_{W,k}$) calculées ou bien les valeurs appréhendées de la pression différentielle (Dp), et l'on forme la différence ($DF_{Wf} = ¦F_{Wf,k}¦-¦F_{Wf,k-1}¦$) des valeurs de force due au vent latéral ($¦F_{Wf,k}¦-¦F_{Wf,k-1}¦$) filtrées déterminées au moment instantané et au moment du dernier calcul et l'on compare avec une valeur de seuil ($-Schw^*¦F_{Wf,k-1}¦$ au $-Schw^*¦F_{Wf,k}¦$) dépendant de la farce due au vent latéral, l'appareil de commande identifiant

- l'entrée dans une rafale de vent latéral (42), dans la mesure où la différence ($DF_{Wf} = ¦F_{Wf,k}¦-¦F_{Wf,k-1}¦$) entre les valeurs dues au vent latéral filtrées est supérieure à la valeur de seuil dépendant de la farce due au vent latéral ($DF_{Wf}>-Schw^*¦F_{Wf,k-1}¦$) et
- la sortie de la rafale de vent latéral (42), dans la mesure où la différence ($DF_{Wf} = ¦F_{Wf,k}¦-¦F_{Wf,k-1}¦$) entre les valeurs de force due au vent latéral filtrées est inférieure à la valeur de seuil dépendant de la force due au vent latéral ($DE_{Wf}<-Schw^*¦F_{Wf,k-1}¦$).

**19.** Dispositif selon la revendication 18, caractérisé en ce que le filtrage des valeurs des forces dues au vent latéral ($F_{Wf,k}$) s'effectue au moyen d'un filtre passe-bas avec une fréquence limite de l'ordre de 0,2 Hz.

**20.** Dispositif selon au mains l'une des revendications précédentes 14 à 19, caractérisé en ce que les points de prélèvement de pression (18, 19) sont disposés symétriquement par rapport au plan longitudinal vertical du véhicule (1), sur sa partie avant.

**21.** Dispositif selon la revendication 20, caractérisé en ce que les points de prélèvement de pression (18, 19) sont disposés sur les ailes avant gauche et droite.

**22.** Dispositif selon la revendication 20 au 21, caractérisé en ce que les points de prélèvement de pression (18, 19) sont disposés de manière à ce qu'ils ne se trouvent pas dans les zones où il y a un décollement de l'écoulement d'air, même en cas de grande valeur de l'angle (angle de déplacement alpha) entre l'axe longitudinal de véhicule et le vecteur somme ($v_{Res}$) constitué du vecteur de vitesse de roulage (v) et du vecteur de vitesse du vent ($v_W$).

**23.** Dispositif selon au mains l'une des revendications 14 à 22, caractérisé en ce que les points de prélèvement de pression (18, 19) sont réalisés sous forme de perçages (20, 21) ménagés dans la peau extérieure de carrosserie et centralement, entre les deux points de prélèvement de pression (18, 19) étant disposé un capteur de pression différentielle (22) relié aux deux perçages (20, 21) par l'intermédiaire de tuyaux ou de tubes (23, 24) ayant autant que possible la même longueur.

**24.** Dispositif selon au moins l'une des revendications précédentes 14 à 23, caractérisé en ce que le système de capteur de pression (25; 15, 18 à 24) est conçu de manière que les fluctuations de pression se produisant sur la surface de carrosserie ne soient fausses que d'une façon non notable par absorption, réflexion et résonance lorsqu'elles se situent dans une plage de fréquence de 0 Hertz à environ 5 Hertz.

**25.** Dispositif selon au moins l'une des revendications précédentes 14 à 23, caractérisé en ce qu'un signal, prélevé du capteur de pression différentielle (22) et représentant la pression différentielle, est converti, par l'intermédiaire de valeurs de correction fonction du type du véhicule et fonction de la position des perçages de pression, en une force latérale agissant sur le véhicule (1) et résultant de l'action du vent latéral.

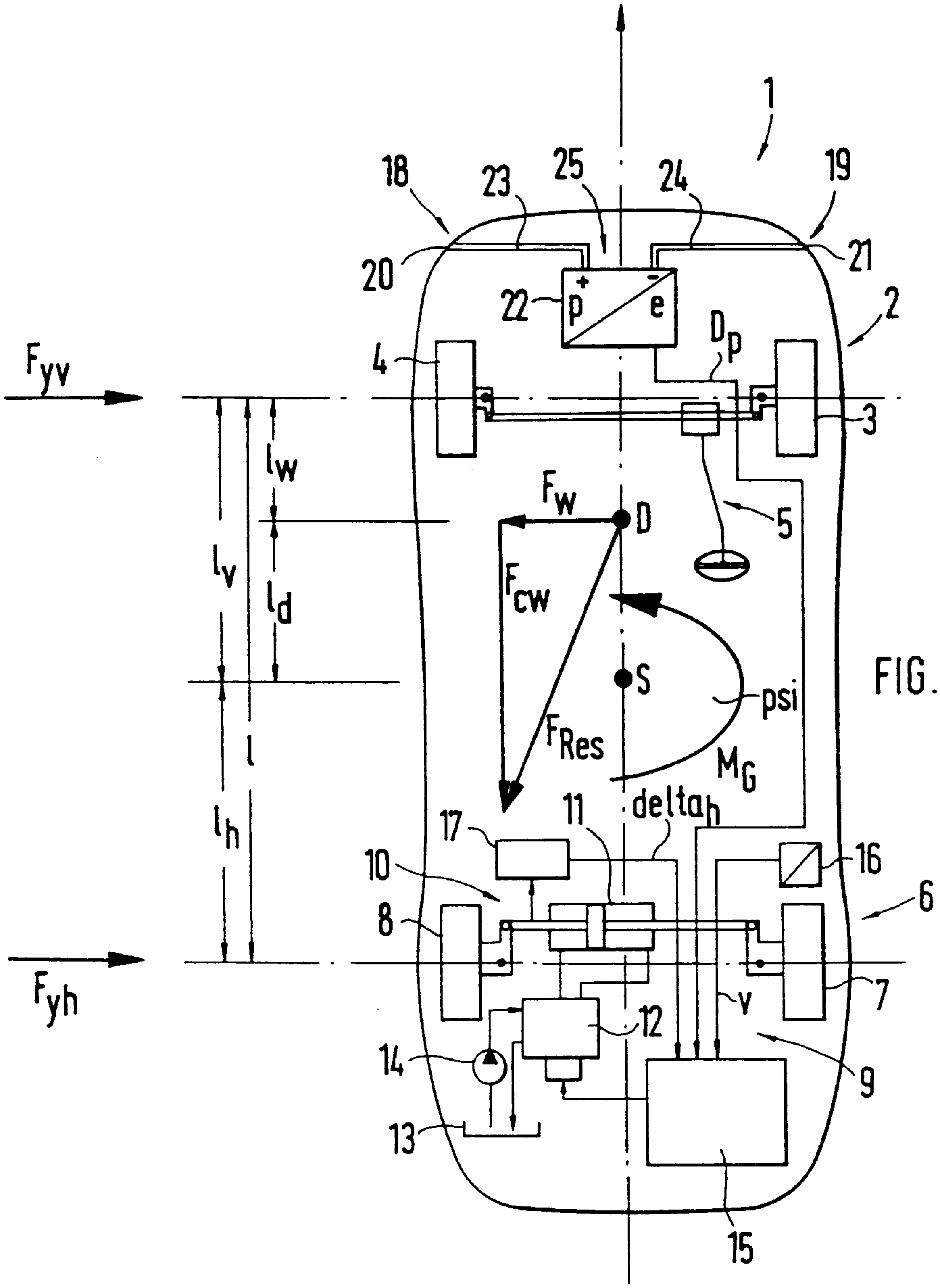
1
18
23
25
24
19
20
21
22
p
e
2
Dp
4
3
Fyv
lw
Fw
D
5
lv
ld
Fcw
S
psi
FRes
l
MG
deltah
lh
11
17
16
10
6
8
Fyh
v
7
12
14
9
13
15

FIG.1

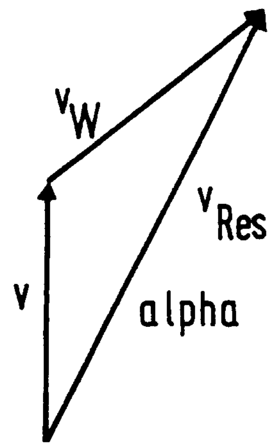

$v_W$
$v_{Res}$
v
alpha


FIG. 2

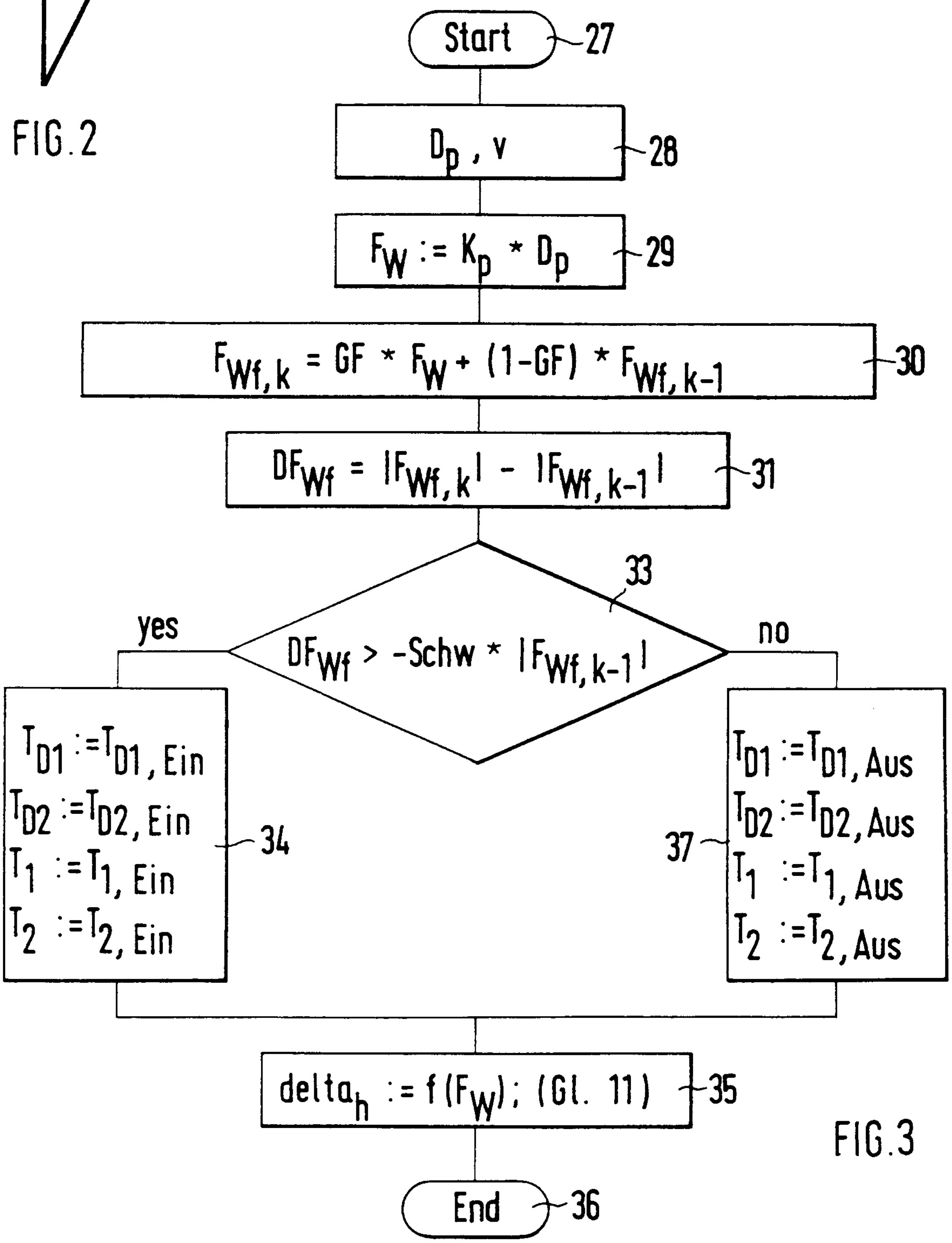

Start
27
$D_p$ , v
28
$F_W := K_p * D_p$
29
$F_{Wf,k} = GF * F_W + (1-GF) * F_{Wf,k-1}$
30
$DF_{Wf} = |F_{Wf,k}| - |F_{Wf,k-1}|$
31
33
yes
$DF_{Wf} > -Schw * |F_{Wf,k-1}|$
no
$T_{D1} := T_{D1,Ein}$
$T_{D2} := T_{D2,Ein}$
$T_1 := T_{1,Ein}$
$T_2 := T_{2,Ein}$
34
37
$T_{D1} := T_{D1,Aus}$
$T_{D2} := T_{D2,Aus}$
$T_1 := T_{1,Aus}$
$T_2 := T_{2,Aus}$
$delta_h := f(F_W)$; (Gl. 11)
35
End
36


FIG. 3

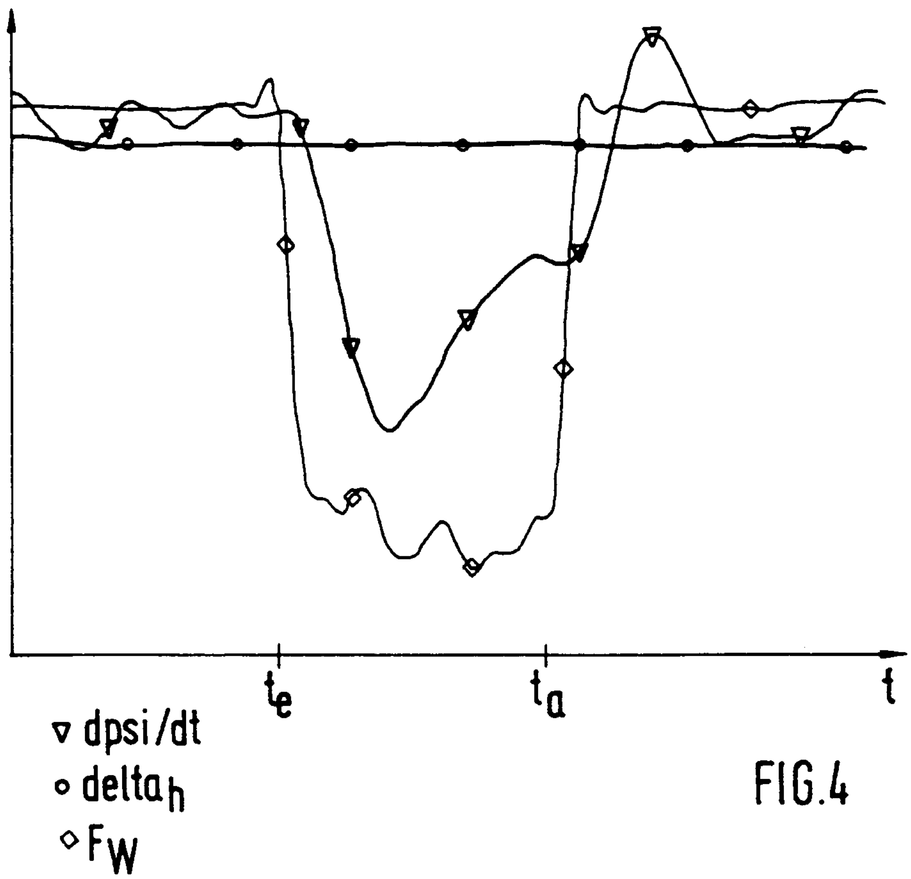


FIG.4

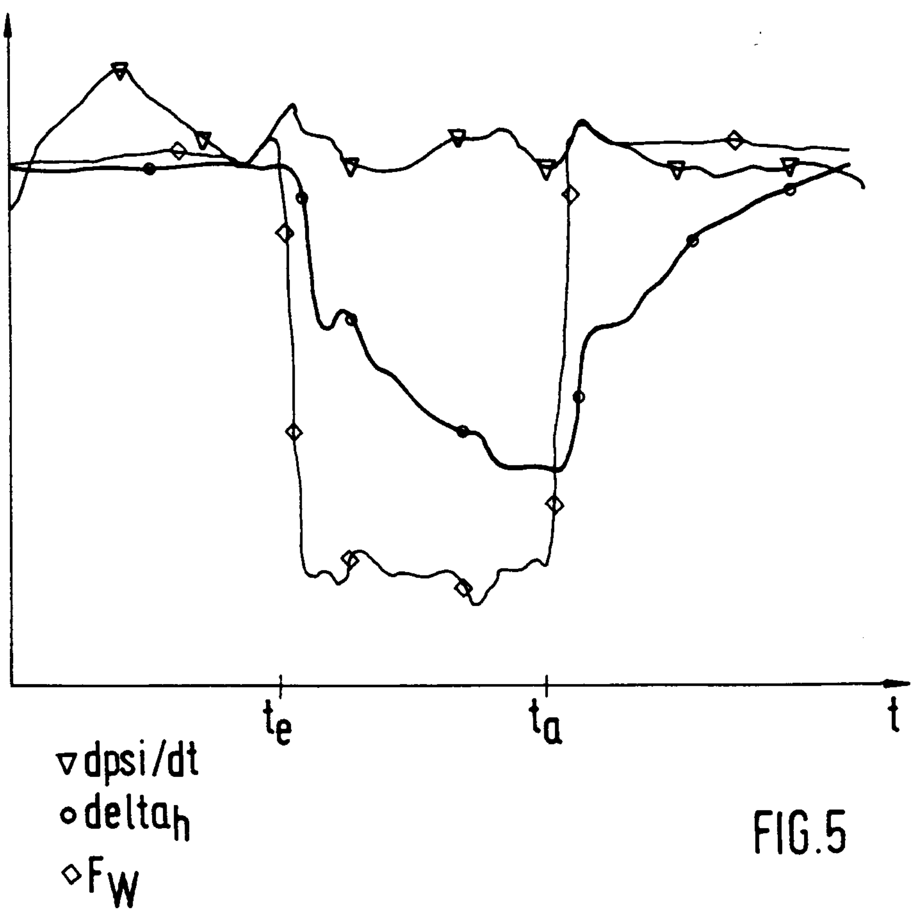


FIG.5

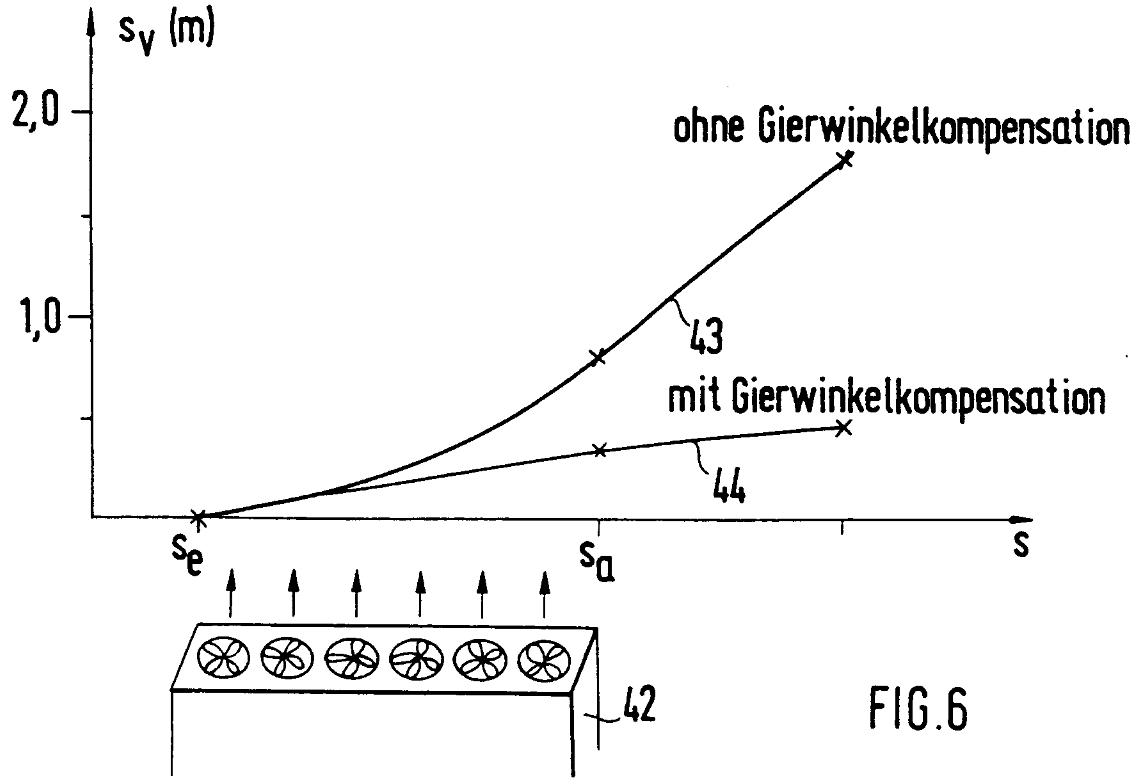
$s_v$ (m)
2,0
1,0
ohne Gierwinkelkompensation
43
mit Gierwinkelkompensation
44
$s_e$
$s_a$
s
42

FIG.6